# EUROPEAN PATENT APPLICATION

(11) **EP 1 650 480 A1**
(43) Date of publication of application: **26.04.2006**
(21) Application number: 05109678.2
(22) Date of filing: 18.10.2005
(51) Int. Cl.: F16J 15/32, F16C 33/78

(54) **A sealing device for bearings**

(30) Priority: 20.10.2004 IT TO20040133 U
(71) Applicant: RFT S.p.A., 10121 Torino (IT)
(72) Inventor: Foti, Claudio, 14010 Dusino San Michele (Asti) (IT)
(74) Representative: Fioravanti, Corrado

(57) **Abstract**

In order to seal an annular gap (11) between the races (12, 13) of a rolling bearing, a sealing device (10) comprises a sealing gasket (16) of elastic material fixed to an annular shield (15) secured to the outer bearing race (12), and an annular shield or *flinger* (14) with an L-shape cross section secured to the inner bearing race (13). The *flinger* (14) forms a radial wall (20) extending towards the bearing race (12) and a cylindrical axial portion (19) fixed to a cylindrical axial surface (13a) of the inner race (13). Over-moulded or vulcanized on the *flinger* (14) is an elastic gasket (22) forming, as a single piece:
- one or two sealing lips (23, 24) for contacting the annular shield (15), and
- a covering layer (22c) that covers continuously on the outside a radial surface (14a) of the *flinger* (14) on a side facing the outside of the bearing.

## Description

The present invention refers a sealing device for bearings of motor vehicle wheel hubs. The invention is intended for use, particularly but not exclusively, with heavy motor vehicles.

With bearings of wheels hubs it is known to use sealing devices for hermetically sealing the annular gap defined between the bearing races.

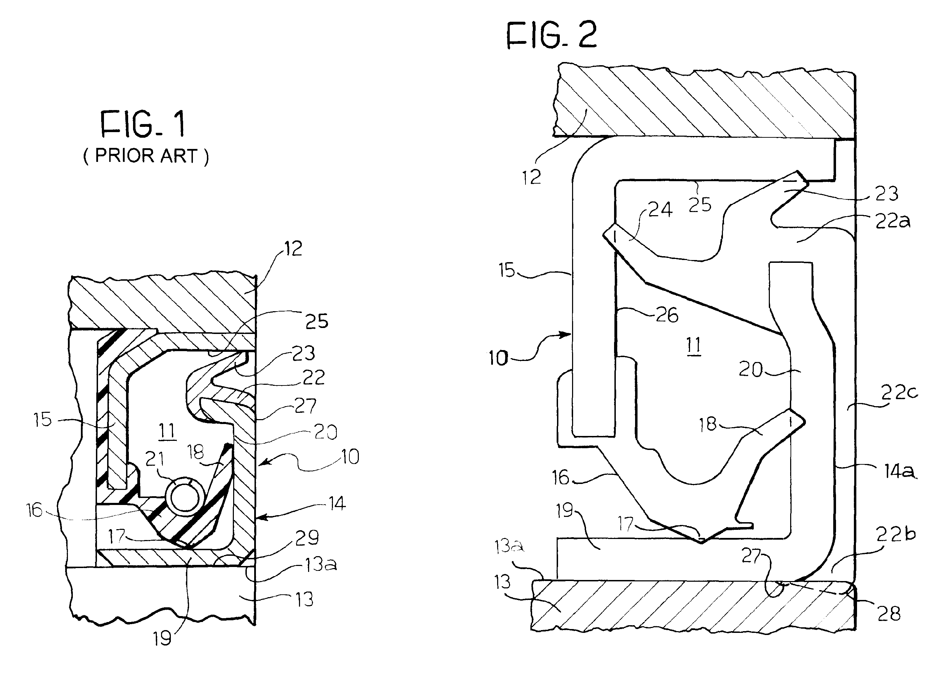

Figure 1 shows a cross sectional view of a conventional sealing device 10 which serves to seal an annular gap 11 between the races 12 and 13 of a bearing. The sealing device 10 comprises a first metallic annular shield 14 (called "*flinger*") secured to the radially inner, stationary race 13 of the bearing and a second metallic annular shield 15 secured to the radially outer, rotating race 12 of the bearing. Fixed to the stationary shield 15 is a sealing gasket 16 of elastomeric material with a V shape having two sealing lips 17, 18 slidingly engaging the opposite shield 14. The radial sealing lip 17 is engaged against a cylindrical axial portion 19 of the shield 14. The axial sealing lip 18 is elongated and flexible and slidingly engages a radial wall portion 20 of the shield 14. Contact of the radial lip 17 is usually ensured by a circumferential spring 21.

Examples of sealing devices of the above-mentioned type are disclosed in EP-A-0 937 984 and EP-A-1 008 775. Sealing devices of this type carry out the dual task of:
- preventing external polluting agents (water, dust, mud) from entering the inner parts of the bearing where the rolling elements (not shown) are located and, simultaneously,
- preventing any leak of the lubricant grease which is normally confined within the inner ambient of the bearing so as to lubricate the surfaces involved in the rolling.

Fixed by vulcanization to the end portion of the shield 14 facing the outer race 12 is a gasket 22 having a radial sealing lip 23 which slides against an axial cylindrical portion 25 of the shield 15. The shield 14 is made of stainless steel so as not to be attacked by contaminating agents to which it is exposed on the axially outer side of the bearing (to the right in Figure 1).

In order to improve the static sealing action of the device 10, and, more particularly, prevent leakage at the interface between the outer race 13 and the shield 14, a rubber film 29 (about 5 microns thick) is interposed between these two elements. This film, commonly known as "Bore-tite" in the field, covers possible scratches on the outer race which may constitute passages for external fluids or the lubricant contained within the bearing.

It has been noticed that a device of the above-mentioned type involves rather high manufacturing costs, both for the choice of the material (stainless steel) which the *flinger* 14 is made of, and for applying the rubber film 29. Furthermore, many finished pieces exhibit rubber flashes 27 protruding from the gasket 22 along the outer surface of the *flinger* 14 due to an imperfect clamping of the mould in which the gasket 22 is over-moulded onto the *flinger.* A defect of this kind is not accepted by many vehicle manufactures, and, consequently, there is a lot of scrap. In addition, the elastomeric material of the gasket 22 does not firmly adhere to stainless steel. As a result, the attachment of the gasket 22 to the *flinger* is problematic. This can jeopardize efficiency of the sealing gasket. As will be understood, a defective sealing device adversely affects the life of the bearing on which it is mounted, especially if the bearing has to work in an ambient where there is a great quantity of polluting agents, such as is the case of wheel hub bearings on heavy motor vehicles.

It is an object of the present invention to provide an improved sealing device capable of obviating the above discussed drawbacks. Above all, there is a need to provide a sealing device which is cheaper as compared to the past, but able of insuring an efficient sealing action for a mileage of 1.600.000 km, as required by certain heavy motor vehicle manufacturers.

These and other objects and advantages, that will be better understood herein after, are attained according to the present invention by a sealing device having the features defined in the appended claims.

The features and the advantages of the invention will appear from the detailed description of the embodiment thereof, given by way of example, reference being made to the accompanying drawings, provided by way of non-limitative indication, in which:
Figure 1 is a partial axial cross-sectional view of a sealing device of conventional design mounted in a bearing; and
Figure 2 is a partial axial cross-sectional view of a sealing device according to the present invention, mounted in a bearing.

With reference to Figure 2, and using the same reference numbers already used to indicate same or similar parts discussed with reference to Figure 1, a gasket 16 of elastomeric material having a substantially V-shaped cross-section is fixed to a metallic annular shield 15 secured to an outer, rotatable race 12 of a bearing. An annular metallic shield (or *flinger)* 14 is fixed to the inner stationary race 13 of the bearing. Shield 14 has a substantially L-shaped cross section with a cylindrical axial portion 19 fixed to a coaxial, cylindrical surface 13a of inner race 13, and a radial wall portion 20 extending towards the outer race 12 of the bearing.

The gasket 16 forms a radial sealing lip 17 intended to radially contact the cylindrical portion 19 of shield 14. Further, the gasket 16 forms an elongated axial sealing lip 18 for elastically contacting the radial wall 20 of shield 14.

According to the present invention, over-moulded or vulcanized onto the shield 14 is an annular gasket 22 forming, as a single piece:
a radially outer portion 22a with a first, radial sealing lip 23 sliding against an axial cylindrical portion 25 of the opposite shield 15, and a second, axial sealing lip 24 sliding against a radial wall portion 26 of shield 15;
a radially inner portion 22b with a further, static sealing lip 28 projecting in a radially inner direction so as to seal from the outside the interface zone between the axial portion 19 of shield 14 and the inner race 13;
a covering layer 22c joining the portions 22a and 22b, and covering continuously from the outside the radial surface 14a of the *flinger* 14 on a side facing the outside of the bearing.

It is to be noted that in figure 2, the gaskets 16 and 22 are shown in their non-deformed conditions.

Owing to this shape, the gasket 22 achieves the following advantages.

The static sealing lip 28, formed as a single piece with the gasket 22, allows to eliminate the conventional rubber film indicated 29 in Figure 1. This simplifies and accelerates the step of assembling the sealing device in the bearing and eliminates costs related to the manufacturing of the said film.

The covering layer 22c allows to use a *flinger* 14 made of a material different from stainless steel, conventionally used. For example, a cheaper and non-inoxidable metal may be used, which will be protected by the layer 22c anyway.

By selecting a non-inoxidable material for the *flinger* 14, for example a non-stainless steel, adhesion of the rubber of gasket 22 to the *flinger* is improved. This increases the useful life, the efficiency and reliability of the sealing device.

Possible rubber flashes resulting from vulcanizing the gasket 22 on the *flinger* 14 will be in a position (indicated at 27 in Figure 2) non visible from the outside. Therefore, the amount of production waste will be cut down drastically as compared to the past.

The axial sealing lip 24 is optional. However, this lip forms an additional barrier that hinders considerably the access of external contaminating agents to the inner parts of the bearing.

The invention is not intended to be limited to the embodiment described and illustrated herein, which should be considered as an example of an embodiment of the sealing device; rather, the invention may be modified with regard to the shape, dimensions and arrangement of parts, and to constructional and functional details and materials being used. For example, the thickness of the covering layer 22c may vary locally, for instance forming a number of small seats or notches (not shown) on the outer surface in order to facilitate gripping the gasket by means of mechanical tool used for fitting the sealing device between the races of the bearing.

## Claims

1. A sealing device (10) for sealing an annular gap (11) between the races (12, 13) of a bearing for the hub of a motor vehicle wheel, particularly a heavy motor vehicle, the sealing device (10) comprising:
- a first sealing gasket (16) of elastic material fixed to a first annular shield (15) secured to a first bearing race (12), and
- a second annular shield (14) secured to a second bearing race (13), wherein the second annular shield (14) has a substantially L-shaped transversal cross-section with
- an axial cylindrical portion (19) adapted for fixing to a cylindrical axial surface (13a) of the second race (13), and
- a radial wall (20) extending from the axial cylindrical portion (19) towards the first bearing race (12),
- a second sealing gasket (22) of elastic material over-moulded or vulcanized on the second annular shield (14) and having at least one radial sealing lip (23) for contacting an axial cylindrical surface (25) of the first annular shield (15),
**characterized in that** the second gasket (22) forms, as a single piece:
a radially outer portion (22a) having said radial sealing lip (23), and
a covering layer (22c) that covers continuously on the outside a radial surface (14a) of the second shield (14) on a side facing the outside of the bearing.

2. The sealing device of claim 1, **characterised in that** the covering layer (22c) joins the radially outer portion (22a) to a radially inner portion (22b) having a further, static sealing lip (28) projecting in a radially inner and axially outer direction so as to seal from the outside an interface zone between the axial cylindrical portion (19) of the second shield (14) and the axial cylindrical surface (13a) of the second race (13).

3. The sealing device of claim 1, **characterized in that** the radially outer portion (22a) further forms a second, axial sealing lip (24) for sliding against a radial wall portion (26) of the first annular shield (15).

4. The sealing device of any one of the preceding claims, **characterized in that** the second annular shield (14) is made of a material different from stainless steel, preferably of a non-inoxidable steel or other metal.
